# EUROPÄISCHE PATENTSCHRIFT

(11) **EP 4 086 119 B1**
(45) Veröffentlichungstag und Bekanntmachung des Hinweises auf die Patenterteilung: **24.04.2024**
(21) Anmeldenummer: 22171785.3
(22) Anmeldetag: 05.05.2022
(51) Int. Cl.: B60R 11/02

(54) **HALTER ZUR LÖSBAREN BEFESTIGUNG EINES FLACHEN GERÄTS AN EINEM KRAFTFAHRZEUGSITZ**
HOLDER FOR REVERSIBLY ATTACHING A FLAT DEVICE TO A MOTOR VEHICLE SEAT
SUPPORT DESTINÉ À LA FIXATION AMOVIBLE D'UN APPAREIL PLAT À UN SIÈGE DE VÉHICULE AUTOMOBILE

(30) Priorität: 05.05.2021 DE 202021102428 U
(43) Veröffentlichungstag der Anmeldung: 09.11.2022
(73) Patentinhaber: Kinetix AG, 7000 Chur (CH)
(72) Erfinder: Keller, Michael Andreas, 72250 Freudenstadt (DE); Dyczka, Wojtek, 72226 Simmersfeld-Oberweiler (DE); Heidinger, Jürgen, 80993 München (DE); Spang, Peter, 72178 Waldachtal (DE)
(74) Vertreter: DREISS Patentanwälte PartG mbB

(56) Entgegenhaltungen:
- WO-A1-2011/101083
- DE-U1-202007 005 661
- DE-U1-202009 013 607
- US-A1- 2019 329 717

## Beschreibung

Die Erfindung betrifft einen Halter mit den Merkmalen des Oberbegriffs des Patentanspruchs 1.

Aus der DE 10 2016 102 611 A1 und der US 2019/329717 A1 sind Halter für elektronische Geräte bekannt.

Es hat sich herausgestellt, dass Halter der vorstehend genannten Art in einer Vielzahl von Fahrzeugumgebungen (vom einfachen Kleinwagen bis zu Fahrzeugen der Luxusklasse) und von einer Vielzahl unterschiedlicher Nutzer unterschiedlichen Alters und unterschiedlicher Körpergrößen verwendet werden. Auch die Ausgestaltung der an der Halteeinrichtung zu haltenden Geräte variiert von kleineren Smartphones bis hin zu größeren Tablet-Computern.

Die Erfindung schlägt einen Halter mit den Merkmalen des Patentanspruchs 1 vor.

Der erfindungsgemäße Halter ermöglicht es, die Halteeinrichtung mit dem daran angeordneten Gerät in einer Vielzahl unterschiedlicher Positionen und Lagen anordnen zu können. Insbesondere ermöglicht es der erfindungsgemäße Halter, die Halteeinrichtung mit dem Gerät in unmittelbarer Nähe des Kraftfahrzeugsitzes anzuordnen oder aber in einem zu dem Kraftfahrzeugsitz weiter beabstandeten Raum mit einem zu dem Nutzer des Geräts verkleinerten Abstand. Dies ist beispielhaft für Fahrzeugsituationen vorteilhaft, in welchen ein Nutzer mit kleinerer Körpergröße ein relativ kleines Gerät benutzen möchte, insbesondere, wenn der Halter in einem Fahrzeug mit einem großzügigen Rücksitzraum angeordnet ist.

Insbesondere ist es bevorzugt, wenn die erste Schwenkachse und die zweite Schwenkachse in einer Gebrauchslage des Halters horizontal orientiert sind. Dies stellt sicher, dass eine Bewegung der Bauteile des Halters in einer vertikalen Bewegungsebene erfolgt, welche parallel zur Fahrzeuglängsachse verläuft. Befindet sich die Halteeinrichtung in einem zu dem Kraftfahrzeugsitz weiter beabstandeten Bereich und nimmt man einen Auffahrunfall des Kraftfahrzeuges an, können die Halteeinrichtung und das Koppelelement innerhalb der genannten Bewegungsebene nach vorne ausweichen, sodass sich das Verletzungsrisiko eines Fahrzeuginsassens, der sich bei einem Unfall ebenfalls in Fahrzeugrichtung nach vorne bewegt, verringert. Dies gilt auch für den Fall, dass der Fahrzeuginsasse in Fahrzeugquerrichtung etwas versetzt zu dem Halter sitzen sollte.

Bevorzugt ist es ferner, wenn die Befestigungseinrichtung einen sich längs einer Steckachse erstreckenden Steckabschnitt aufweist, wobei die Steckachse in der Gebrauchslage des Halters und in einem in die Steckaufnahme eingesteckten Zustand horizontal orientiert ist. Dies ermöglicht eine einfache und platzsparende Verbindung zwischen der Befestigungseinrichtung und der Steckaufnahme des Kraftfahrzeugsitzes.

Bevorzugt ist es ferner, wenn ein Schwenkweg des Koppelelements ausgehend von einer vertikalen Orientierung des Koppelelements begrenzt ist auf einen ersten Teil des Schwenkwegs in Richtung auf den Kraftfahrzeugsitz von maximal 40°, und/oder auf einen entgegengesetzten zweiten Teil des Schwenkwegs von maximal 150°. Die Begrenzung im Bereich des ersten Teils des Schwenkwegs verhindert eine ungewollte Kollision der Rückseite der Halteeinrichtung mit oberhalb der Steckaufnahme angeordneten Bauteilen des Kraftfahrzeugsitzes, beispielsweise einer kratzempfindlichen Oberfläche einer Kopfstütze oder Kopfstützenverschalung. Eine Begrenzung des zweiten Teils des Schwenkwegs verhindert eine solche Kollision in einem Bereich unterhalb der Steckaufnahme des Kraftfahrzeugsitzes, beispielsweise im Bereich eines Bezuges oder einer Verschalung der Rückenlehne.

Die vorstehenden Erläuterungen zu den Bereichen eines Kraftfahrzeugsitzes beziehen sich auf eine Anordnung der Steckaufnahme in einem Bereich eines Übergangs zwischen einer Kopfstütze und einer Rückenlehne eines Kraftfahrzeugsitzes, insbesondere im Bereich freiliegender Kopfstützenstangen. Die genannten Bereiche sind aber nur beispielhaft; es versteht sich, dass die Steckaufnahme auch in einem Integralsitz angeordnet sein kann, bei welchem Rückenlehnenbereiche und Kopfstützenbereiche ineinander übergehen.

Bevorzugt ist es ferner, wenn zur Begrenzung einer ersten Endlage eines oder des Schwenkwegs des Koppelelements relativ zu der Befestigungseinrichtung und/oder zur Begrenzung einer zweiten Endlage eines oder des Schwenkwegs des Koppelelements relativ zu der Befestigungseinrichtung das Koppelelement und die Befestigungseinrichtung miteinander in Anschlag steht. Dies ermöglicht eine einfache Definition der genannten Endlagen durch einfache Anlage der genannten Bauteile, wobei die Bauteile insbesondere in einem zu der ersten Schwenkachse beabstandeten Bereich aneinander anliegen.

Gemäß einer weiteren Ausführungsform der Erfindung ist vorgesehen, dass ein Schwenkwinkel der Halteeinrichtung relativ zu dem Koppelelement mindestens 90°, vorzugsweise mindestens 120°, insbesondere mindestens 150° beträgt. Dies ermöglicht eine weitgehend freie Neigungseinstellung der Halteeinrichtung um die zweite Schwenkachse, und zwar vorzugsweise in jeder der Schwenklagen des Koppelelements relativ zu der Befestigungseinrichtung.

Es ist ferner bevorzugt, wenn ein Schwenkwinkel der Halteeinrichtung relativ zu dem Koppelelement maximal 170° beträgt, wodurch die Einstellbarkeit der Neigung der Halteeinrichtung auf einen Einstellbereich beschränkt wird, in welchem die Halteeinrichtung eine Neigung einnimmt, in der ein daran gehaltenes Gerät in etwa vertikal orientiert ist, oder geringfügig nach unten weist oder geringfügig nach oben weist. Insbesondere können Lagen der Halteeinrichtung vermieden werden, in welchen die Halteeinrichtung im Wesentlichen nach unten weist und bei einem unbeabsichtigten Lösen der Halteeinrichtung ein daran gehaltenes Gerät nach unten von der Halteeinrichtung abfallen würde.

Zur Begrenzung einer ersten Endlage eines Schwenkwegs der Halteeinrichtung relativ zu dem Koppelelement und/oder zur Begrenzung einer zweiten Endlage eines oder des Schwenkwinkels der Halteeinrichtung relativ zu dem Koppelelement ist es bevorzugt, wenn die Halteeinrichtung und das Koppelelement miteinander in Anschlag stehen, insbesondere in einem zu der zweiten Schwenkachse beabstandeten Bereich. Dies ermöglicht eine zuverlässige und stabile Definition der ersten Endlage und/oder der zweiten Endlage.

Es ist ferner bevorzugt, wenn das erste Schwenkgelenk und/oder das zweite Schwenkgelenk als Reibgelenk ausgebildet ist oder sind. Solche Reibgelenke ermöglichen insbesondere eine stufenlose Verstellbarkeit des Koppelelements relativ zu der Befestigungseinrichtung bzw. der Halteeinrichtung relativ zu dem Koppelelement.

Erfindungsgemäß umfasst der Halter eine Einrichtung, welche das Koppelelement um die erste Schwenkachse herum mit einem Drehmoment beaufschlagt, das für eine Aufrichtung des Koppelelements aus einer horizontalen Lage in eine stärker vertikal orientierte Lage wirksam ist. Die Einrichtung übt also eine der Schwerkraft entgegengesetzte Haltekraft auf das Koppelelement und auf die damit verbundene Halteeinrichtung aus, sodass ein Gewichtsausgleich für ein an der Halteeinrichtung gehaltenes Gerät geschaffen werden kann. In Verbindung mit der Verwendung eines Reibgelenks für das erste Schwenkgelenk ermöglicht dies eine erhöhte Leichtgängigkeit des Reibgelenks und somit eine komfortablere Nutzung der Halteeinrichtung bei der Einstellung einer Schwenklage des Koppelelements.

Zur weiteren Erhöhung des Komforts des Halters wird vorgeschlagen, dass die Halteeinrichtung ein Drehgelenk aufweist, mittels welchem ein Haltebereich der Halteeinrichtung um eine Drehachse verdrehbar ist, welche senkrecht zu der zweiten Schwenkachse orientiert ist. Dies ermöglicht es - in jeder Lage des Koppelelements - das an der Halteeinrichtung gehaltene Gerät gemeinsam mit dem Haltebereich wahlweise in eine Hochkant-Anordnung oder in eine Queranordnung zu verbringen. Zu diesem Zweck ist es bevorzugt, wenn das Drehgelenk Raststufen aufweist, welche vorzugsweise um 90° relativ zueinander versetzt sind.

Weitere Merkmale und Vorteile der Erfindung sind Gegenstand der nachfolgenden Beschreibung und der zeichnerischen Darstellung eines bevorzugten Ausführungsbeispiels.

In der Zeichnung zeigt
- Fig. 1: eine perspektivische Ansicht einer Ausführungsform eines Halters;
- Fig. 2: eine Seitenansicht des Halters gemäß Fig. 1, in einer Grundstellung, in welcher ein Koppelelement und eine Halteeinrichtung vertikal orientiert;
- Fig. 3: eine der Fig. 2 entsprechende Seitenansicht, wobei das Koppelelement eine erste Endlage relativ zu einer Befestigungseinrichtung einnimmt;
- Fig. 4: eine der Fig. 3 entsprechende Seitenansicht, wobei die Halteeinrichtung eine erste Endlage relativ zu dem Koppelelement einnimmt;
- Fig. 5: eine der Fig. 2 entsprechende Seitenansicht, wobei das Koppelelement eine zweite Endlage relativ zu einer Befestigungseinrichtung einnimmt;
- Fig. 6: eine der Fig. 5 entsprechende Seitenansicht, wobei die Halteeinrichtung eine zweite Endlage relativ zu dem Koppelelement einnimmt;
- Fig. 7: eine mit der ersten Endlage des Koppelelements gemäß Fig. 3 und Fig. 4 korrespondierende Schnittdarstellung;
- Fig. 8: eine mit der ersten Endlage der Halteeinrichtung gemäß Fig. 4 korrespondierende Schnittdarstellung;
- Fig. 9: eine mit der zweiten Endlage des Koppelelements gemäß Fig. 5 und Fig. 6 und mit einer zweiten Endlage der Halteeinrichtung gemäß Fig. 6 korrespondierende Schnittdarstellung; und
- Fig. 10: einen Vertikalschnitt einer Einrichtung zur Drehmomentbeaufschlagung des Koppelelements.

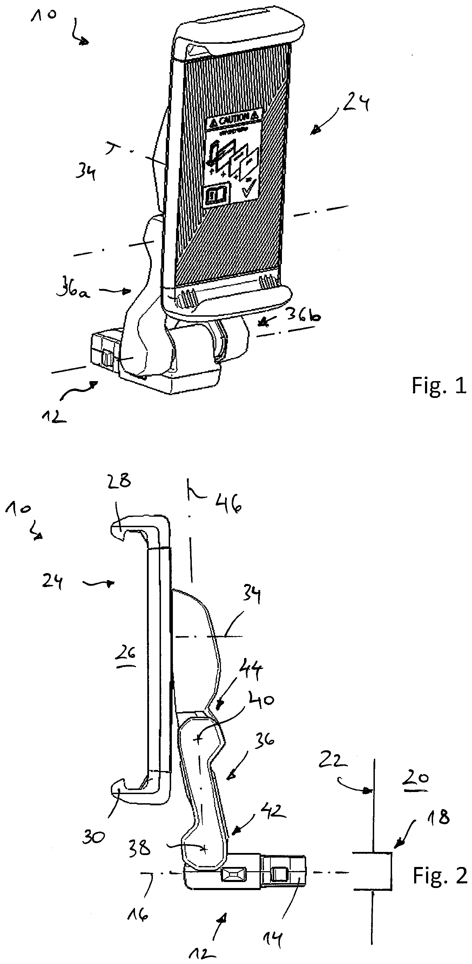

In der Zeichnung ist ein Halter insgesamt mit dem Bezugszeichen 10 bezeichnet. Der Halter 10 weist eine Befestigungseinrichtung 12 mit einem Steckabschnitt 14, vergleiche Figur 2, auf, der sich längs einer Steckachse 16 erstreckt und längs dieser Steckachse 16 in eine Steckaufnahme 18 einführbar und dort lösbar verriegelbar ist. Die Steckaufnahme 18 ist an einem schematisch angedeuteten Kraftfahrzeugsitz 20 angeordnet, wobei der Kraftfahrzeugsitz 20 eine einem Fahrzeugrückraum zugewandte Rückseite 22 aufweist.

Der Halter 10 umfasst ferner eine insgesamt mit dem Bezugszeichen 24 bezeichnete Halteeinrichtung, welche zum lösbaren Halten eines elektronischen Geräts, insbesondere eines Tablet-Computers oder eines Smartphones dient.

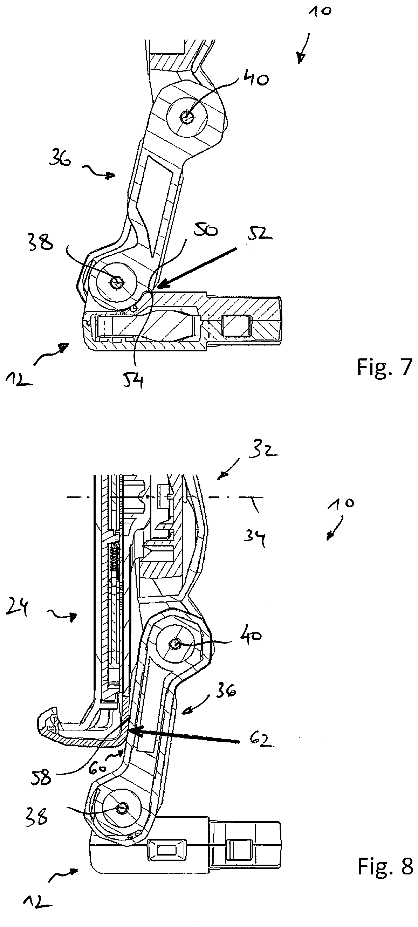

Die Halteeinrichtung 24 weist einen Haltebereich 26 zur Anordnung des Geräts auf. Das Gerät ist bei Anordnung in dem Haltebereich 26 zwischen zwei zueinander beabstandeten und bei Anordnung eines Geräts in dem Haltebereich 26 relativ zueinander vorgespannten Halteelementen 28 und 30 gehalten. Optional umfasst die Halteeinrichtung 24 ein Drehgelenk 32, vergleiche Figur 8, zur Definition einer Drehachse 34, vergleiche Figuren 1 und 2, wodurch der Haltebereich 26 um die Drehachse 34 verdrehbar ist, sodass ein an dem Haltebereich 26 gehaltenes Gerät in einer Hochkant- oder Queranordnung gehalten werden kann.

Die Halteeinrichtung 24 und die Befestigungseinrichtung 12 sind über ein Koppelelement 36 miteinander verbunden, welches auch doppelt ausgeführt sein kann, vergleiche Bezugszeichen 36a und 36b in Figur 1.

Das Koppelelement 36 weist eine erste Schwenkachse 38 auf, mittels welcher das Koppelelement 36 relativ zu der Befestigungseinrichtung 12 verschwenkbar ist. Das Koppelelement 36 weist eine zweite Schwenkachse 40 auf, mittels welcher die Halteeinrichtung 24 relativ zu dem Koppelelement 36 verschwenkbar ist.

Die Schwenkachsen 38 und 40 sind zueinander parallel und insbesondere horizontal orientiert. Vorzugsweise sind die Schwenkachsen 38 und 40 (bezogen auf eine Erstreckung des Koppelelements 36 längs einer Koppelelementachse) maximal zueinander beabstandet.

Die Schwenkachsen 38 und 40 sind Teil jeweiliger Schwenkgelenke 42 und 44.

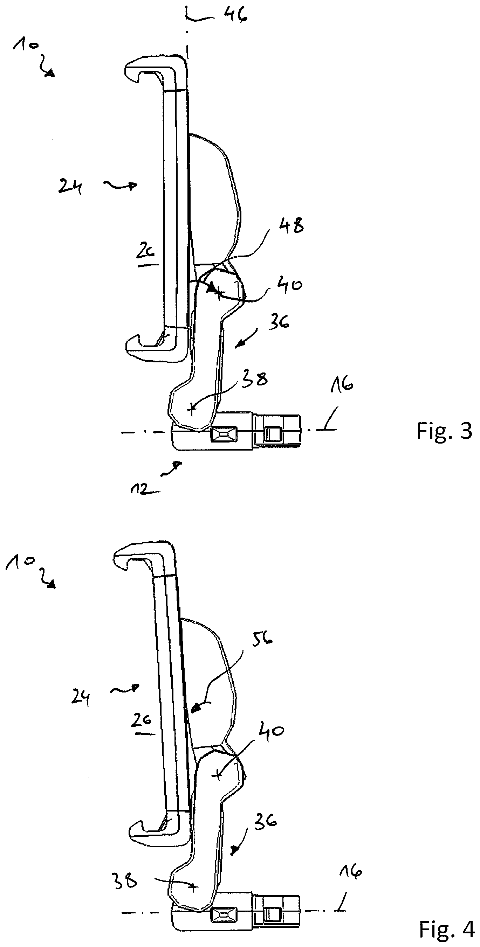

In Figur 2 ist der Halter 10 beispielhaft in einer Grundstellung dargestellt, in welcher das Koppelelement 36 und die Halteeinrichtung 24 mit dem Haltebereich 26 vertikal orientiert sind. Diese Vertikalstellung korrespondiert mit einer in Figur 3 dargestellten Vertikalebene 46, welche senkrecht zu der horizontalen Steckachse 16 orientiert ist. Bezogen auf die Vertikalebene 46 kann das Koppelelement 36 um die erste Steckachse 38 herum in eine in Figur 3 dargestellte erste Endlage verschwenkt werden, wobei das Koppelelement 36 ausgehend von seiner Grundstellung in Richtung auf den Kraftfahrzeugsitz 20 (vergleiche Figur 2) um einen ersten Teil 48 eines Schwenkwegs verschwenkt. Ein diesem Schwenkweg 48 zugeordneter Schwenkwinkel beträgt vorzugsweise maximal 40° und insbesondere maximal 25°.

In der ersten Endlage des Koppelelements 36 liegt ein an dem Koppelelement 36 ausgebildeter Anschlag 50 in einem Anschlagbereich 52 an einer Gegenfläche 54 der Befestigungseinrichtung 12 an, vergleiche Figur 7.

Für das Beispiel der Stellung des Koppelelements 36 in der ersten Endlage, vergleiche Figuren 3 und 4, kann die Halteeinrichtung 24 ausgehend aus einer Vertikallage um die zweite Schwenkachse 40 geringfügig nach unten bis hin zu einer ersten Endlage der Halteeinrichtung 24 verschwenkt werden, vergleiche Figur 4. Ein entsprechender Schwenkweg 56 der Halteeinrichtung 24 um die zweite Schwenkachse 40 herum ist in einer ersten Endlage der Halteeinrichtung 24 dadurch begrenzt, dass ein an dem Haltebereich 24 ausgebildeter Anschlag 58 in Kontakt mit einer Gegenfläche 60 des Koppelelements 36 steht, sodass in einem Anschlagbereich 62 eine weitere Verschwenkung des Haltebereichs 24 relativ zu dem Koppelelement 36 verhindert wird, vergleiche Figur 8.

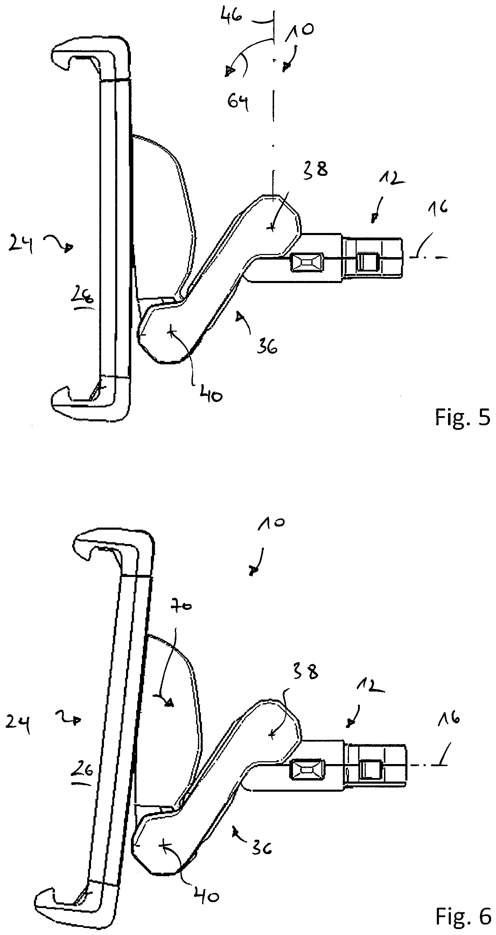

Auch in Figur 5 ist die mit Figur 2 korrespondierende Grundstellung des Koppelelements 36, in welcher dieses vertikal orientiert ist, anhand einer Vertikalebene 46 illustriert. Bezogen auf diese Vertikalebene 46 ist das Koppelelement 36 in einer zu dem ersten Teil 48 des Schwenkwegs (vergleiche Fig. 3) entgegengesetzten Richtung entlang eines zweiten Teils 64 des Schwenkwegs um die erste Schwenkachse 38 herum verschwenkbar, insbesondere um maximal 135°.

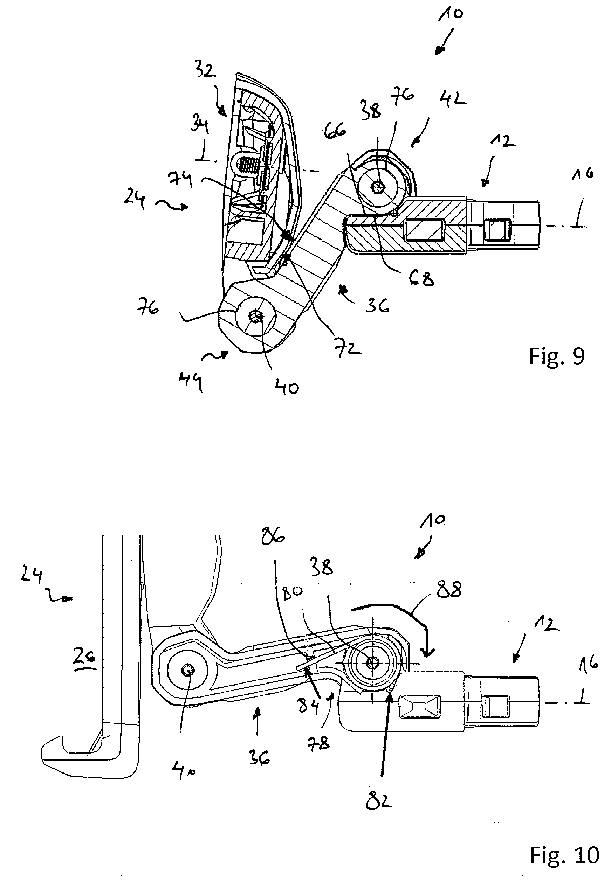

Bei maximaler Nutzung des zweiten Teils 64 des Schwenkwegs nimmt das Koppelelement 36 eine in den Figuren 5 und 6 zweite Endlage ein, in welcher eine Anschlagfläche 66 des Koppelelements 36 in Anschlag mit einer Gegenfläche 68 der Befestigungseinrichtung 12 steht, vergleiche Figur 9.

Ausgehend aus einer in Figur 5 dargestellten vertikalen Orientierung der Halteeinrichtung 24, vergleiche Figur 5, kann die Halteeinrichtung 24 um die zweite Schwenkachse 40 herum in einer Schwenkrichtung 70 in Richtung auf die Rückseite 22 des Kraftfahrzeugsitzes 20, vergleiche Figur 2, verschwenkt werden, sodass der Haltebereich 26 der Halteeinrichtung 24 geringfügig nach schräg oben verschwenkt wird, was insbesondere für groß gewachsene Nutzer vorteilhaft ist.

Die Verschwenkung entlang der Schwenkrichtung 70 ist vorzugweise bis durch eine (in Figur 6 dargestellte) zweite Endlage der Halteeinrichtung 24 relativ zu dem Koppelelement 36 begrenzt, in welcher eine Anschlagfläche 72 der Halteeinrichtung 24 in Anlage mit einer Gegenfläche 74 des Koppelelements 36 steht, vergleiche Figur 9.

Somit weist das Koppelelement 36 vorzugsweise insgesamt vier Abschnitte auf, die bedarfsweise eine der vorgenannten Endlagen mit definieren, nämlich den Anschlag 50 (vgl. Figur 7), die Gegenfläche 60 (vgl. Figur 8), die Anschlagfläche 66 (vgl. Figur 9) und die Gegenfläche 74 (vgl. Figur 9). Die vorstehend genannten vier Abschnitte des Koppelelements 36 sind vorzugsweise relativ zueinander räumlich versetzt und insbesondere durch unterschiedliche Abschnitte einer Umfangsfläche des Koppelelements 36 gebildet.

Die Bewegung des Koppelelements 36 relativ zu der Befestigungseinrichtung 12 um die erste Schwenkachse 38 herum ist vorzugsweise selbsthemmend. Dies gilt auch für die Bewegung der Halteeinrichtung 24 um die zweite Schwenkachse 40 des Koppelelements 36 herum. Zur Realisierung einer solchen Selbsthemmung ist es bevorzugt, wenn die Schwenkgelenke 42, 44 als Reibgelenke ausgebildet sind.

Beispielsweise weisen die Schwenkgelenke 42, 44 zylindrische Reibbereiche 76 auf, vergleiche Figur 9, in welchen eine zylinderförmige Außenfläche mit einer hohlzylinderförmigen Innenfläche reibschlüssig zusammenwirkt. Für diesen Reibschluss sind Kunststoffmaterialien bevorzugt.

Um eine leichtere Bewegung des Koppelelements 36 um die erste Schwenkachse 38 herum relativ zu der Befestigungseinrichtung 12 zu ermöglichen, weist der Halter 10 eine (in Figur 10 dargestellte) Einrichtung 78 auf. Die Einrichtung 78 umfasst beispielsweise eine Feder 80, welche sich in einem ersten Bereich 82 an der Befestigungseinrichtung 12 abstützt und in einem dazu beabstandeten Bereich 84 eine Kraft erzeugt, welche auf einen Kraftaufnahmebereich 86 des Koppelelements 36 wirkt und dieses um die erste Schwenkachse 38 herum aus einer horizontalen Lage - einer Drehmomentrichtung 88 entsprechend - in eine stärker vertikal orientierte Lage drängt.

Bei Anordnung eines Geräts in dem Haltebereich 26 der Halteeinrichtung 24 dient die Einrichtung 78 dementsprechend zur Aufnahme oder Kompensation des Gewichts des Geräts oder zumindest eines Teils des Gewichts des Geräts. Für den Fall, dass der Haltebereich 26 frei ist, kann die Einrichtung 78 auch dazu dienen, das Koppelelement 36 in die vertikale Grundstellung des Koppelelements 36 (vergleiche Figuren 2, 3 und 5) zu verbringen, sodass die Halteeinrichtung 24 in einer unbetätigten Grundstellung nahe zu dem Kraftfahrzeugsitz 20 angeordnet ist.

Der Halter 10 ermöglicht eine vielfältige Einstellbarkeit des Haltebereichs 26 für große und kleine Nutzer in unterschiedlichen Fahrzeugumgebungen.

## Patentansprüche

1. Halter (10) zur lösbaren Befestigung eines flachen, in etwa rechteckigen Geräts - wie eines Tablet-Computers oder eines Smartphones - an einem Kraftfahrzeugsitz (20), wobei der Halter (10) eine Befestigungseinrichtung (12) zur lösbaren Steckbefestigung des Halters (10) an einer dem Kraftfahrzeugsitz (20) zugeordneten Steckaufnahme (18) aufweist und wobei der Halter (10) eine Halteeinrichtung (24) zur lösbaren Halterung des Geräts an dem Halter (10) aufweist, wobei die Befestigungseinrichtung (12) und die Halteeinrichtung (24) über ein Koppelelement (36) miteinander verbunden sind, wobei das Koppelelement (36) über ein erstes Gelenk mit der Befestigungseinrichtung (12) und über ein zweites Gelenk mit der Halteeinrichtung (24) verbunden ist, wobei die Gelenke als Schwenkgelenke mit einem ersten Schwenkgelenk (42) und einer ersten Schwenkachse (38) und mit einem zweiten Schwenkgelenk (44) und einer zweiten Schwenkachse (40) ausgebildet sind, wobei die erste Schwenkachse (38) und die zweite Schwenkachse (40) zueinander parallel orientiert sind, **dadurch gekennzeichnet, dass** der Halter (10) eine Einrichtung (78) umfasst, welche das Koppelelement (36) um die erste Schwenkachse (38) herum mit einem Drehmoment beaufschlagt, das für eine Aufrichtung des Koppelelements (36) aus einer horizontalen Lage in eine stärker vertikal orientierte Lage wirksam ist.

2. Halter (10) nach Anspruch 1, **dadurch gekennzeichnet, dass** die erste Schwenkachse (38) und die zweite Schwenkachse (40) in einer Gebrauchslage des Halters (10) horizontal orientiert sind.

3. Halter (10) nach einem der vorstehenden Ansprüche, **dadurch gekennzeichnet, dass** die Befestigungseinrichtung (12) einen sich längs einer Steckachse (16) erstreckenden Steckabschnitt (14) aufweist, wobei die Steckachse (16) in einer oder der Gebrauchslage des Halters (10) und in einem in die Steckaufnahme (18) eingesteckten Zustand horizontal orientiert ist.

4. Halter (10) nach einem der vorstehenden Ansprüche, **dadurch gekennzeichnet, dass** ein Schwenkweg des Koppelelements (36) ausgehend von einer vertikalen Orientierung (46) des Koppelelements (36) begrenzt ist:
- auf einen ersten Teil (48) des Schwenkwegs in Richtung auf den Kraftfahrzeugsitz (20) von maximal 40°, und/oder
- auf einen entgegensetzten zweiten Teil (64) des Schwenkwegs von maximal 150°.

5. Halter (10) nach einem der vorstehenden Ansprüche, **dadurch gekennzeichnet, dass** zur Begrenzung einer ersten Endlage eines oder des Schwenkwegs des Koppelelements (36) relativ zu der Befestigungseinrichtung (12) und/oder zur Begrenzung einer zweiten Endlage eines oder des Schwenkwegs des Koppelelements (36) relativ zu der Befestigungseinrichtung (12) das Koppelelement (36) und die Befestigungseinrichtung (12) miteinander in Anschlag stehen.

6. Halter (10) nach einem der vorstehenden Ansprüche, **dadurch gekennzeichnet, dass** ein Schwenkwinkel der Halteeinrichtung (24) relativ zu dem Koppelelement (36) mindestens 90°, vorzugsweise mindestens 120°, insbesondere mindestens 150° beträgt.

7. Halter (10) nach einem der vorstehenden Ansprüche, **dadurch gekennzeichnet, dass** ein Schwenkwinkel der Halteeinrichtung (24) relativ zu dem Koppelelement (36) maximal 170° beträgt.

8. Halter (10) nach einem der vorstehenden Ansprüche, **dadurch gekennzeichnet, dass** zur Begrenzung einer ersten Endlage eines Schwenkwegs der Halteeinrichtung (24) relativ zu dem Koppelelement (36) und/oder zur Begrenzung einer zweiten Endlage eines oder des Schwenkwegs der Halteeinrichtung (24) relativ zu dem Koppelelement (36) die Halteeinrichtung (24) und das Koppelelement (36) miteinander in Anschlag stehen.

9. Halter (10) nach einem der vorstehenden Ansprüche, **dadurch gekennzeichnet, dass** das erste Schwenkgelenk (42) und/oder das zweite Schwenkgelenk (44) als Reibgelenk ausgebildet ist oder sind.

10. Halter (10) nach einem der vorstehenden Ansprüche, **dadurch gekennzeichnet, dass** die Halteeinrichtung (24) ein Drehgelenk (32) aufweist, mittels welchem ein Haltebereich (26) der Halteeinrichtung (24) um eine Drehachse (34) verdrehbar ist, welche senkrecht zu der zweiten Schwenkachse (40) orientiert ist.

## Claims

1. Holder (10) for reversibly attaching a flat, approximately rectangular device - such as a tablet computer or smartphone - to a motor vehicle seat (20), wherein the holder (10) has a fastening device (12) for releasable push-fit fastening of the holder (10) to a push-fit receiver (18) assigned to the motor vehicle seat (20), and wherein the holder (10) has a holding device (24) for releasable holding of the device on the holder (10), wherein the fastening device (12) and the holding device (24) are connected together via a coupling element (36), wherein the coupling element (36) is connected to the fastening device (12) via a first j oint and to the holding device (24) via a second joint, wherein the joints are configured as hinges with a first hinge (42) and a first pivot axis (38) and a second hinge (44) and a second pivot axis (40), wherein the first pivot axis (38) and the second pivot axis (40) are oriented parallel to one another, **characterised in that** the holder (10) comprises a device (78) which loads the coupling element (36) with a torque about the first pivot axis (38) which acts to erect the coupling element (36) out of a horizontal position into a more vertically oriented position.

2. Holder (10) according to claim 1, **characterised in that** the first pivot axis (38) and the second pivot axis (40) are oriented horizontally in a usage position of the holder (10).

3. Holder (10) according to any of the preceding claims, **characterised in that** the fastening device (12) has a push-fit portion (14) extending along a push-fit axis (16), wherein the push-fit axis (16) is oriented horizontally in a or the usage position of the holder (10) and in a state inserted into the push-fit receiver (18).

4. Holder (10) according to any of the preceding claims, **characterised in that** a pivot path of the coupling element (36), starting from a vertical orientation (46) of the coupling element (36), is limited:
- to a first part (48) of the pivot path in the direction of the motor vehicle seat (20) of maximum 40°, and/or
- to an opposite second part (64) of the pivot path of maximum 150°.

5. Holder (10) according to any of the preceding claims, **characterised in that** to delimit a first end position of a or the pivot path of the coupling element (36) relative to the fastening device (12) and/or to limit a second end position of a or the pivot path of the coupling element (36) relative to the fastening device (12), the coupling element (36) and the fastening device (12) stop against one another.

6. Holder (10) according to any of the preceding claims, **characterised in that** a pivot angle of the holding device (24) relative to the coupling element (36) is at least 90°, preferably at least 120°, in particular at least 150°.

7. Holder (10) according to any of the preceding claims, **characterised in that** a pivot angle of the holding device (24) relative to the coupling element (36) is maximum 170°.

8. Holder (10) according to any of the preceding claims, **characterised in that** to limit a first end position of a pivot path of the holding device (24) relative to the coupling element (36) and/or to limit a second end position of a or the pivot path of the holding device (24) relative to the coupling element (36), the holding device (24) and the coupling element (36) are stopped against one another.

9. Holder (10) according to any of the preceding claims, **characterised in that** the first hinge (42) and/or the second hinge (44) is or are configured as friction hinges.

10. Holder (10) according to any of the preceding claims, **characterised in that** the holding device (24) has a rotary joint (32) by means of which a holding region (26) of the holding device (24) is rotatable about a rotational axis (34) which is oriented perpendicularly to the second pivot axis (40).

## Revendications

1. Support (10) permettant de fixer de manière amovible un appareil plat, approximativement rectangulaire - tel qu'une tablette ou un smartphone - sur un siège de véhicule automobile (20), dans lequel le support (10) présente un dispositif de fixation (12) permettant de fixer le support (10) de manière amovible par enfichage au niveau d'un logement de fiche (18) associé au siège de véhicule automobile (20) et dans lequel le support (10) présente un dispositif de retenue (24) permettant de retenir l'appareil de manière amovible au niveau du support (10), dans lequel le dispositif de fixation (12) et le dispositif de retenue (24) sont reliés l'un à l'autre par l'intermédiaire d'un élément de couplage (36), dans lequel l'élément de couplage (36) est relié au dispositif de fixation (12) par l'intermédiaire d'une première articulation et au dispositif de retenue (24) par l'intermédiaire d'une seconde articulation, dans lequel les articulations sont réalisées sous forme d'articulations pivotantes avec une première articulation pivotante (42) et un premier axe de pivotement (38) et avec une seconde articulation pivotante (44) et un second axe de pivotement (40), dans lequel le premier axe de pivotement (38) et le second axe de pivotement (40) sont orientés parallèlement l'un par rapport à l'autre, **caractérisé en ce que** le support (10) comprend un dispositif (78) qui soumet, autour du premier axe de pivotement, l'élément de couplage (36) à un couple (38) à même d'orienter l'élément de couplage (36) d'une position horizontale vers une position plus verticale.

2. Support (10) selon la revendication 1, **caractérisé en ce que** le premier axe de pivotement (38) et le second axe de pivotement (40) sont orientés horizontalement dans une position d'utilisation du support (10).

3. Support (10) selon l'une quelconque des revendications précédentes, **caractérisé en ce que** le dispositif de fixation (12) présente une section d'enfichage (14) s'étendant le long d'un axe d'enfichage (16), dans lequel l'axe d'enfichage (16) est orienté horizontalement dans une, ou la, position d'utilisation du support (10) et dans un état d'enfichage au sein du logement d'enfichage (18).

4. Support (10) selon l'une quelconque des revendications précédentes, **caractérisé en ce qu'**une course de pivotement de l'élément de couplage (36) est limitée à partir d'une orientation verticale (46) de l'élément de couplage (36) :
- d'au plus 40°sur une première partie (48) de la course de pivotement en direction du siège de véhicule (20), et/ou
- d'au plus 150° sur une seconde partie (64) opposée de la course de pivotement.

5. Support (10) selon l'une quelconque des revendications précédentes, **caractérisé en ce que** l'élément de couplage (36) et le dispositif de fixation (12) sont en butée l'un contre l'autre afin de limiter une première position finale d'une, ou de la, course de pivotement de l'élément de couplage (36) par rapport au dispositif de fixation (12) et/ou afin de limiter une seconde position finale d'une, ou de la, course de pivotement de l'élément de couplage (36) par rapport au dispositif de fixation (12).

6. Support (10) selon l'une quelconque des revendications précédentes, **caractérisé en ce qu'**un angle de pivotement du dispositif de retenue (24) par rapport à l'élément de couplage (36) est d'au moins 90°, de manière préférée d'au moins 120°, de manière particulièrement préférée d'au moins 150°.

7. Support (10) selon l'une quelconque des revendications précédentes, **caractérisé en ce qu'**un angle de pivotement du dispositif de retenue (24) par rapport à l'élément de couplage (36) est d'au plus 170°.

8. Support (10) selon l'une quelconque des revendications précédentes, **caractérisé en ce que** le dispositif de retenue (24) et l'élément de couplage (36) sont en butée l'un contre l'autre afin de limiter une première position finale d'une course de pivotement du dispositif de retenue (24) par rapport à l'élément de couplage (36) et/ou afin de limiter une seconde position finale d'une, ou de la, course de pivotement du dispositif de retenue (24) par rapport à l'élément de couplage (36).

9. Support (10) selon l'une quelconque des revendications précédentes, **caractérisé en ce que** la première articulation pivotante (42) et/ou la seconde articulation pivotante (44) est ou sont réalisée(s) sous forme d'articulation à friction.

10. Support (10) selon l'une quelconque des revendications précédentes, **caractérisé en ce que** le dispositif de retenue (24) présente une articulation rotative (32) au moyen de laquelle il est possible de faire tourner une région de retenue (26) du dispositif de retenue (24) autour d'un axe de rotation (34) orienté perpendiculairement au second axe de pivotement (40).
